# FASCICULE DE BREVET EUROPEEN

(11) **EP 3 269 270 B1**
(45) Date de publication et mention de la délivrance du brevet: **02.09.2020**
(21) Numéro de dépôt: 17179867.1
(22) Date de dépôt: 05.07.2017
(51) Int. Cl.: A45D 34/00, A45D 40/00, B65D 79/02

(54) **RÉCIPIENT POUR UN PRODUIT COSMÉTIQUE PRÉSENTANT UNE PÉRIODE APRÈS OUVERTURE DONNÉE ET CARTOUCHE POUR UN TEL RÉCIPIENT**
BEHÄLTER FÜR EIN KOSMETIKPRODUKT MIT EINEM BEGRENZTEN VERWENDUNGSZEITRAUM NACH ÖFFNUNG, UND NACHFÜLLEINSATZ FÜR EINEN SOLCHEN BEHÄLTER
CONTAINER FOR A COSMETIC PRODUCT HAVING A GIVEN PERIOD AFTER OPENING AND CARTRIDGE FOR SUCH A CONTAINER

(30) Priorité: 12.07.2016 FR 1656686
(43) Date de publication de la demande: 17.01.2018
(73) Titulaire: Albéa Services, 92230 Gennevilliers (FR)
(72) Inventeur: JAMMET, Jean-Claude, 80090 Amiens (FR)
(74) Mandataire: Gevers & Orès

(56) Documents cités:
- WO-A1-03/087955
- WO-A1-2016/033202
- WO-A2-2005/020168
- FR-A1- 2 962 307
- GB-A- 2 459 317

## Description

### DOMAINE TECHNIQUE DE L'INVENTION

La présente invention concerne un récipient pour un produit cosmétique présentant une période après ouverture donnée et une cartouche pour un tel récipient.

### ÉTAT DE LA TECHNIQUE

L'invention concerne, notamment mais non exclusivement, le domaine des produits cosmétiques, tels que les crèmes, les lotions, les baumes, etc. destinés à être conditionnés dans différents types de récipients comme des pots, des flacons, des tubes, etc.

Dans ce domaine, la règlementation exige en outre que le récipient du produit cosmétique comporte des indications précises quant à sa durabilité d'utilisation et ceci afin d'améliorer l'information fournie aux consommateurs.

La date de durabilité minimale est par exemple indiquée par la mention « *à utiliser de préférence avant fin JJ*/*MM*/*AA ou MM*/*AA* » sur certains produits.

Par « date de durabilité minimale », on entend la date jusqu'à laquelle le produit cosmétique, conservé dans des conditions appropriée, l'emballage ou le récipient n'ayant notamment jamais été ouvert, continue à remplir sa fonction initiale, conserve ses propriétés et reste sûr pour la santé humaine. On parle aussi de « Date Limite d'Utilisation Optimale », sous l'acronyme « DLUO ».

Toutefois, l'indication de la date de durabilité est obligatoire uniquement lorsque la durabilité du produit cosmétique n'excède pas 30 mois.

Lorsque la durabilité du produit cosmétique excède les 30 mois, les produits portent alors généralement une autre indication correspondant à la durée pendant laquelle le produit est sûr après son ouverture et peut être utilisé sans dommage pour le consommateur.

Cette indication de durée est communément appelée « **P.A.O** » acronyme en français de « Période Après Ouverture » (ou encore en anglais « Period After Opening »).

La période dite de « PAO » est ainsi indiquée par un symbole réglementé représentant un pot de crème ouvert, avec une durée d'utilisation exprimée en mois et/ou en années.

La période après ouverture est déterminée selon différents critères, notamment par rapport au risque de contamination microbienne.

Si la mention de la période après ouverture figure sur le récipient contenant le produit cosmétique conformément à la réglementation, la mention de la « PAO » indique une période, par exemple 6 ou 12 mois, et non pas une date déterminée, notamment par comparaison avec la date de durabilité précitée.

Lorsque l'on souhaite savoir si un produit cosmétique est sûr, c'est à dire s'il a ou non dépassé la limite correspondant de sa période après ouverture, il est alors impératif de connaître avant tout la date de première ouverture du produit, seule date à partir de laquelle il est possible de calculer si l'on se trouve ou non encore dans la période après ouverture.

Or, il est cependant très rare que, d'une manière ou d'une autre, l'on note l'information que constitue la date de première ouverture d'un récipient de produit cosmétique et par conséquent que l'on s'en souvienne.

C'est la raison pour laquelle, on est généralement dans l'incapacité totale de savoir ensuite si le produit est périmé ou si l'on se trouve toujours dans la période après ouverture du produit.

Le document FR-2.962.307 de l'état de la technique décrit un dispositif de conditionnement d'un produit, notamment cosmétique, comportant des moyens de mesure d'une période d'utilisation et un ensemble de verrouillage commandé sélectivement pour en interdire l'utilisation lorsque la période d'utilisation optimale est terminée.

Le but de l'invention est tout particulièrement de remédier à ce problème en proposant une solution pour pouvoir contrôler facilement la période après ouverture d'un produit cosmétique.

### BREF RESUME DE L'INVENTION

Dans ce but, l'invention propose un récipient pour un produit cosmétique présentant une période après ouverture donnée, ledit récipient comportant au moins un dispositif électronique de traitement de données apte à lire une ou des données qui, associées au produit, sont contenues dans un support de données pour enregistrer sélectivement au moins une première ouverture du produit de manière à pouvoir calculer la période après ouverture dudit produit, caractérisé en ce que le support de données est une étiquette RFID apte à être lue par radiofréquence par ledit dispositif électronique.

Avantageusement, la première ouverture du produit est détectée sélectivement par le dispositif électronique de traitement de données, notamment détectée automatiquement grâce à des moyens de protection qui doivent être ôtés pour pouvoir utiliser le produit cosmétique conditionné dans le récipient.

Conformément à l'invention, la date de la première ouverture du produit est alors enregistrée par le dispositif électronique de traitement de données grâce à quoi la période après ouverture (PAO) est ensuite susceptible d'être calculée.

Avantageusement, le dispositif électronique est relié à des moyens indicateurs et/ou un appareil pour pouvoir notamment alerter en cas d'expiration de ladite période après ouverture.

Avantageusement, l'appareil est un téléphone sans fil qui comporte une application et qui est apte à échanger des données avec le dispositif électronique contenu dans le récipient, ledit dispositif lui communiquant au moins une information en relation avec la période après ouverture (PAO).

De préférence, le dispositif électronique communique à l'appareil les données qui, associées au produit, sont lues dans le support de données ainsi que la date de première ouverture et/ou la durée restante avant l'expiration de la période après ouverture (PAO).

Avantageusement, le dispositif communique également le niveau de charge de la batterie formant les moyens d'alimentation du dispositif.

L'application installée dans l'appareil veille alors à ce que le niveau soit toujours suffisant pour garantir un bon fonctionnement du dispositif électronique intégré au récipient et alerte lorsqu'un changement de la batterie (pile) doit être effectué.

L'application permet d'apporter à l'utilisatrice non seulement de l'information sur le produit cosmétique du récipient connecté, en particulier sur ladite période après ouverture (PAO), mais encore d'autres informations comme des conseils ciblés, des offres commerciales, une authentification du produit, etc.

Le récipient connecté, avantageusement associé à une application installée sur un téléphone, est un concept innovant permettant d'établir une communication personnalisée entre une marque et sa clientèle, utilisatrices des produits cosmétiques.

De préférence, le récipient pour produit cosmétique selon l'invention n'est pas à usage unique.

En effet, le récipient est avantageusement susceptible d'être rechargé en produit cosmétique au moyen d'une cartouche contenant du produit cosmétique. Un changement de cartouche dans le récipient est par exemple effectué lorsque le produit cosmétique a été totalement utilisé ou encore lorsque la période après ouverture (PAO) du produit cosmétique est expirée.

### Selon d'autres caractéristiques de l'invention :

- des moyens de protection amovibles sont agencés pour former un écran interdisant une lecture du support de données par une antenne du dispositif électronique jusqu'à ce que lesdits moyens de protection soient éliminés lors d'une première ouverture du produit ;
- les moyens de protection sont constitués par une partie d'un opercule qui est scellé pour recouvrir le produit contenu dans le récipient ;
- le récipient comporte une cavité apte à recevoir une cartouche de produit cosmétique pour recharger le récipient en produit ;
- le récipient comporte une cavité dans laquelle est montée une cartouche de produit cosmétique pour recharger le récipient en produit ;
- le support de données est solidaire de la cartouche de produit cosmétique ;
- le récipient et la cartouche comportent des moyens d'indexation angulaire pour positionner le support de données par rapport à l'antenne du dispositif électronique de traitement de données ;
- le dispositif électronique de traitement de données est apte à être alimenté en courant électrique par des moyens d'alimentation formés par au moins une batterie, telle qu'une pile bouton ;
- le dispositif électronique de traitement de données est apte à occuper un état actif et un état passif dans lequel le dispositif est arrêté ou en veille, notamment pour en réduire la consommation d'électricité ;
- le dispositif électronique de traitement de données est apte à échanger des données avec au moins un appareil électronique, ledit appareil comportant une application logicielle destinée à délivrer des informations par l'intermédiaire d'au moins un écran d'affichage dont au moins une en relation avec la période après ouverture.

L'invention propose encore une cartouche de produit cosmétique présentant une période après ouverture (PAO) donnée pour recharger un récipient du type comportant au moins un dispositif électronique de traitement de données apte à lire une ou des données qui, associées audit produit cosmétique, sont contenues dans un support de données pour enregistrer sélectivement au moins une première ouverture du produit de manière à pouvoir calculer la période après ouverture (PAO) dudit produit, caractérisée en ce que la cartouche comporte ledit support de données.

Le support de données solidaire de la cartouche est une étiquette RFID.

Selon d'autres caractéristiques de la cartouche :
- la cartouche comporte des moyens de protection amovibles sont agencés pour former un écran interdisant une lecture du support de données jusqu'à ce que lesdits moyens de protection soient éliminés lors d'une première ouverture du produit ;
- les moyens de protection sont constitués par une partie d'un opercule qui est scellé pour recouvrir le produit contenu dans la cartouche ;
- la cartouche comporte des moyens d'indexation angulaire destinés à coopérer avec des moyens complémentaires du récipient pour positionner ledit support de données par rapport au dispositif électronique de traitement de données, en particulier par rapport à une antenne du dispositif électronique de traitement de données.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :

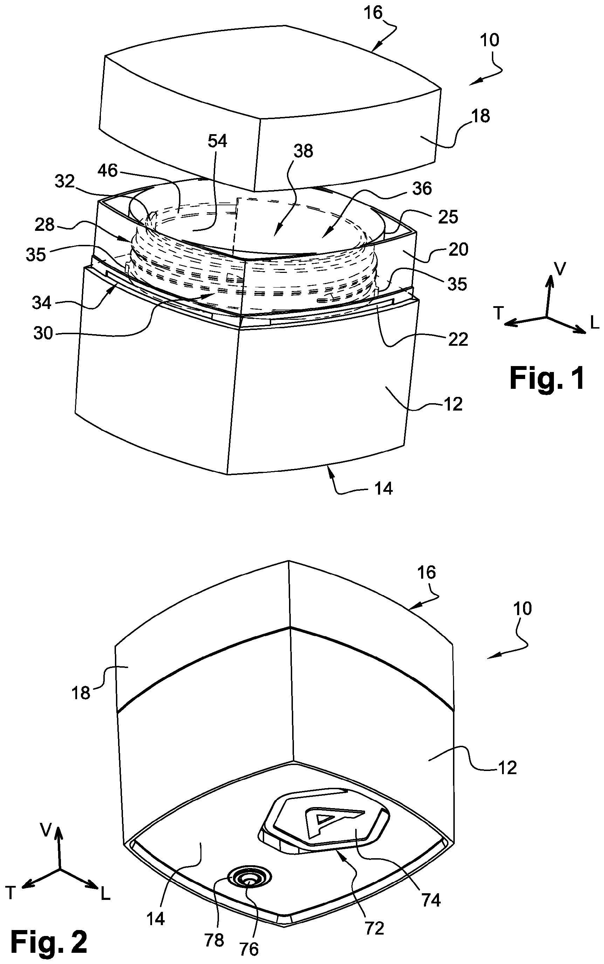

- la figure 1 est une vue en perspective qui représente un exemple de récipient selon l'invention qui est formé par un pot intégrant un dispositif électronique de traitement de données et qui illustre ledit pot avec un couvercle en position ouverte et sans recharge de produit cosmétique à l'intérieur du pot ;
- la figure 2 est une vue en perspective qui représente un pot selon la figure 1 avec son couvercle en position fermée et qui illustre le fond du pot comportant une trappe d'accès pour le changement de la batterie alimentant ledit dispositif électronique ainsi qu'un bouton commandant au moins la mise en service dudit dispositif électronique permettant de calculer la période après ouverture ou PAO du produit cosmétique ;

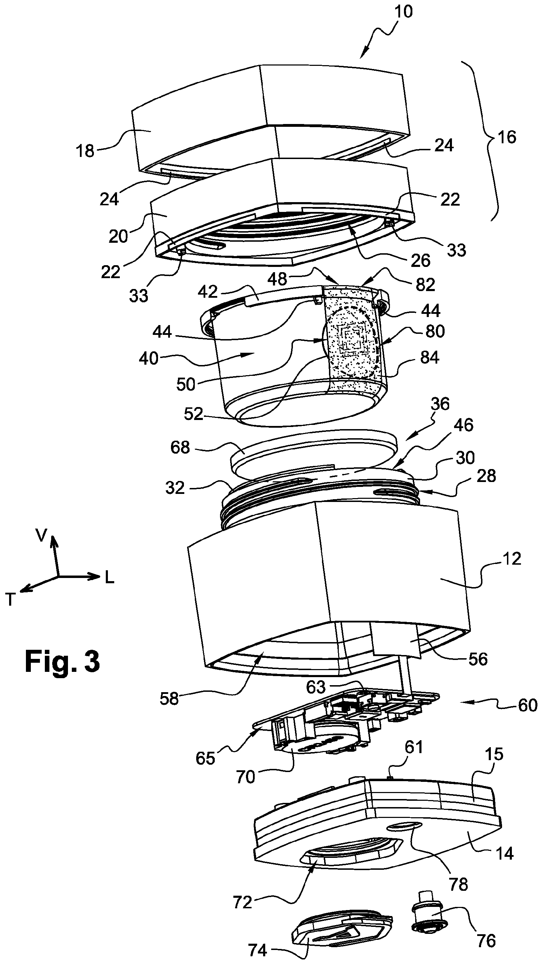

- la figure 3 est une vue en perspective qui représente, en éclaté, les principaux éléments du pot selon l'exemple de réalisation des figures 1 et 2 et qui illustre ledit dispositif électronique muni d'une antenne, un support de données solidaire d'une recharge de produit cosmétique et des moyens de protection formant un écran devant le support de données ;

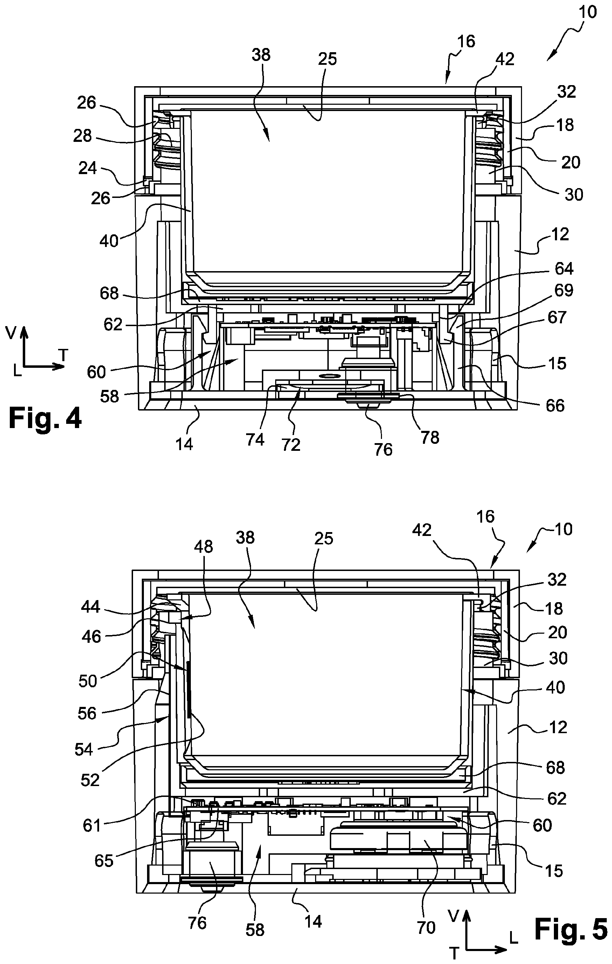

- les figures 4 et 5 sont des vues en coupe qui, selon un plan médian respectivement décalé de 90° d'une figure à l'autre, représentent un pot selon la figure 3 en position fermée et qui illustrent l'agencement des principaux éléments dans le pot comportant une cavité interne qui reçoit une recharge de produit cosmétique munie d'un support de données et, en dessous de la cavité, un logement pour le montage du dispositif électronique de traitement des données.

### DESCRIPTION DETAILLEE DES FIGURES

Dans la suite de la description, on adoptera à titre non limitatif les orientations longitudinale, verticale et transversale en référence au trièdre (L, V, T) représenté sur les figures.

Par convention, les orientations longitudinale et transversale sont déterminées de manière fixe par rapport au corps du récipient de sorte que la position ouverte ou fermée du couvercle du récipient est en outre sans incidence sur les orientations longitudinale et transversale.

On utilisera également à titre non limitatif les termes « supérieur » et « inférieur » en référence à l'orientation verticale du trièdre (L, V, T) ainsi que la direction radiale qui est orthogonale à l'orientation verticale. Les termes « interne ou intérieur» et « externe ou extérieur » sont respectivement utilisés par rapport au récipient d'une manière générale et tout particulièrement par rapport au corps du récipient pour désigner un élément situé soit dedans, soit en dehors.

On a représenté sur les figures 1 à 5, un exemple de réalisation d'un récipient 10 selon l'invention qui est donné à titre non limitatif.

Le récipient 10 est destiné à contenir un produit présentant une période après ouverture (PAO) donnée, en particulier un produit cosmétique.

Un produit cosmétique ne constitue qu'un exemple préféré de produit présentant une période après ouverture (PAO) donnée. Tel qu'indiqué précédemment, la période après ouverture (PAO) d'un produit est généralement indiquée en nombre de mois, parfois en année(s), et débute à compter de la première ouverture du produit.

Dans l'exemple représenté sur les figures 1 à 5, le récipient 10 est constitué par un pot destiné au conditionnement d'un produit cosmétique, notamment une crème.

En variante non représentée, le récipient 10 est par exemple constitué par un flacon, un tube, un applicateur notamment un « lipstick », un distributeur avec une pompe, etc.

Le type de récipient est notamment déterminé en fonction du produit cosmétique, par exemple une crème, une lotion, un gel, un bâton de baume ou de rouge à lèvres, etc.

Tel qu'illustré sur les figures 1 à 5, le pot 10 présente globalement à l'extérieur une forme parallélépipédique, ici de cube. En variante, le pot est de forme cylindrique ou toute autre forme géométrique.

Le pot 10 comporte au moins un corps 12 qui est fermé dans sa partie inférieure par un fond 14 comme illustré sur la figure 2 et qui, à l'opposé, est susceptible d'être ouvert ou fermé en fonction de la position d'un couvercle 16.

Tel qu'illustré sur la figure 3, le fond 14 du pot 10 est une pièce distincte qui est apte à être emboîtée dans le corps 12.

Le fond 14 comporte une jupe 15 qui s'étend verticalement vers le haut et présente radialement à l'extérieur une face convexe destinée à coopérer avec une partie de la face interne du corps 12 du pot 10 située en vis à vis lorsque le fond 14 est emboîté.

Sur la figure 1, le couvercle 16 étant ôté, le pot 10 est ouvert pour permettre l'accès au produit conditionné, tandis que sur la figure 2, le pot 10 est inversement fermé par l'intermédiaire du couvercle 16.

De préférence, le couvercle 16 est une pièce indépendante du corps 12 du pot 10 en position ouverte. En variante, le couvercle 16 est relié au corps 12 par exemple par une charnière assurant un montage pivotant du couvercle 16 entre au moins une position ouverte et une position fermée du pot 10.

De préférence, le couvercle 16 est réalisé en deux parties, respectivement un capot 18 externe et un sous-capot 20 destiné à être monté à l'intérieur du capot 18.

Dans l'exemple de réalisation, le sous-capot 20 est emboîté à l'intérieur du capot 18 de manière à obtenir le couvercle 16 du pot 10.

Avantageusement, des moyens de liaison sont prévus entre les deux parties du couvercle 16 pour immobiliser le sous-capot 20 relativement au capot 18. Les moyens de liaison sont par exemple réalisés par coopération de formes.

Tel qu'illustré par la figure 3, le sous-capot 20 comporte des crans 22 répartis sur ses quatre faces latérales dans lesquels s'engagent de manière complémentaire des rainures 24 qui sont ménagées à l'intérieur du rebord du capot 18.

Sur la figure 1, le sous-capot 20 n'est pas représenté assemblé avec le capot 18 pour constituer le couvercle 16 de sorte que les crans 22 y sont également visibles.

Le couvercle 16 comporte des moyens 25 d'étanchéité pour assurer une fermeture étanche du pot 10 de manière à protéger le produit cosmétique contenu à l'intérieur.

Après assemblage du capot 18 et du sous-capot 20, le couvercle 16 obtenu présente avantageusement à l'extérieur une forme homogène avec celle du corps 12 au bénéfice de l'esthétique générale du pot 10 en position fermée.

Le sous-capot 20 comporte à l'intérieur un filetage 26 de forme circulaire qui est complémentaire d'un filetage 28 d'un col 30 du pot 10 pour permettre une liaison par vissage entre le couvercle 16 et le col 30.

Le col 30 comporte radialement sur sa surface externe le filetage 28 tandis que le sous-capot 20 comporte radialement sur sa face interne le filetage 26 complémentaire du filetage 28, lesdits filetages 26 et 28 sont notamment visibles sur la figure 3.

Les moyens 25 d'étanchéité du couvercle 16 sont réalisés sous la forme d'un disque logé à l'intérieur du couvercle 16, entre une face interne du capot 18 et le sous-capot 20.

En position fermée, lesdits moyens 25 d'étanchéité sont comprimés contre un bord 32 du col 30 afin d'assurer une fermeture étanche du pot 10.

De préférence, le pot 10 comporte des moyens 34 de butée qui déterminent la position finale du couvercle 16 lorsque le pot 10 est en position fermée.

Les moyens 34 de butée sont par exemple respectivement formés par deux bras 33 élastiques solidaires du sous-capot 20 et deux ergots 35 solidaires du col 30, les deux bras 33 étant agencés diamétralement à l'opposée l'un de l'autre tout comme le sont également les deux ergots 35.

Sur la figure 1, le sous-capot 20 et le disque 25 d'étanchéité ont respectivement été mis en transparence afin notamment de rendre visible le col 30.

Le bord 32 du col 30 délimite une ouverture 36 circulaire débouchant dans une cavité 38 interne qui est ménagée dans une partie supérieure du corps 12 du pot 10, ladite cavité 38 étant destinée à recevoir directement ou non le produit cosmétique.

De préférence, le produit cosmétique est conditionné dans une cartouche 40 destinée, en position d'utilisation, à être reçue dans la cavité 38 du récipient 10.

Avantageusement, les cartouches 40 de produit permettent de ne pas limiter le pot 10 à un usage unique.

Grâce aux cartouches 40, le pot 10 est susceptible d'être utilisé plus d'une fois en étant successivement rechargé avec une nouvelle cartouche 40 lorsque la cartouche 40 en place doit être remplacée, notamment si la totalité du produit a été utilisée ou que la période après utilisation (PAO) est expirée.

En variante non représentée, le produit cosmétique est directement introduit dans la cavité 38 formée dans le corps 12, sans être conditionné en cartouche.

La cartouche 40 est configurée pour être montée dans la cavité 38 du pot 10.

La cartouche 40 comporte à son extrémité supérieure un rebord 42 présentant en coupe un profil creux en « U » inversé et dans lequel pénètre le bord 32 du col 30 lorsque la cartouche 40 est montée dans la cavité 38 du pot.

La cartouche 40 est destinée à être montée dans une position angulaire déterminée relativement à la cavité 38 grâce à des moyens d'indexation angulaire.

Dans l'exemple de réalisation, la cartouche 40 comporte au moins un pion 44 d'indexation, de préférence une paire de pions 44.

Les pions 44 d'indexation sont destinés à être logés dans une encoche 46 complémentaire qui est ménagée à l'intérieur du col 30 du pot 10 délimitant l'ouverture 36.

Grâce aux moyens d'indexation angulaire, la cartouche 40 ne peut être montée dans la cavité 38 du pot 10 que dans une position dans laquelle les pions 44 d'indexation sont en vis à vis de l'encoche 46 du col 30.

Le rebord 42 de la cartouche 40 est circonférentiellement interrompu au moins entre les pions 44 d'indexation de manière à délimiter, avec l'encoche 46 du bord 32 du col 30, une fente 48 de passage dont la fonction sera décrite ultérieurement.

Le pot 10 comporte un support 50 de données comportant notamment des informations associées au produit cosmétique.

Le support 50 de données est une étiquette RFID qui, aussi appelé « Tag » ou « transpondeur », comporte généralement au moins une puce associée à une antenne.

Avantageusement, l'étiquette RFID formant le support 50 de données est une étiquette passive, c'est à dire par opposition à une étiquette active, une étiquette ne comportant pas de source interne d'alimentation.

On rappelle que « RFID » est l'acronyme anglais de « Radio Frequency IDentification » et correspond à une technologie dans laquelle au moins une lecture de données contenues dans l'étiquette RFID est réalisée, sans contact, par radiofréquence par l'intermédiaire d'un dispositif « interrogateur RFID », encore appelé parfois « lecteur RFID ».

Le dispositif « interrogateur RFID » est apte à émettre des radiofréquences qui vont activer au moins une étiquette RFID en lui fournissant l'énergie nécessaire à son fonctionnement, pour autant que l'étiquette RFID soit située à une distance de détection appropriée qui va notamment varier en fonction des fréquences utilisées, depuis les basses fréquences (BF) jusqu'aux hautes fréquences (HF), voire parfois plus élevées encore.

Le dispositif « interrogateur RFID » envoie des commandes particulières auxquelles répond l'étiquette, l'une des réponses les plus simples étant généralement le renvoie d'une donnée d'identification.

Bien entendu, la technologie RFID tout comme le type de support 50 de données ne sont donnés qu'à titre d'exemples non limitatifs.

En variante, d'autres technologies équivalentes d'échanges de données sans contact sont envisageables par exemple par vision optique ou par liaison infrarouge, notamment avec des codes à barre linéaire ou encore des codes 2D du type QR Code.

La technologie « RFID » est ici préférée dans l'application de l'invention à un récipient pour un produit cosmétique en raison de sa facilité de mise en œuvre, de sa fiabilité et de son coût.

Avantageusement, l'interrogation RFID du support 50 de données est plus précisément effectuée en « NFC » acronyme anglais pour « Near Field Communication » avec laquelle les échanges de données sont réalisés à des distances très courtes, de l'ordre de quelques centimètres.

Dans l'exemple de réalisation, le support 50 de données est solidaire de la cartouche 40. La cartouche 40 comporte un renfoncement 52 dans sa surface externe dans lequel le support 50 de données est destiné à être placé. Le support 50 de données est par exemple fixé par collage sur la cartouche 40.

Grâce au renfoncement 52, le support 50 de données est parfaitement intégré à la cartouche 40. En effet, le support 50 ne s'étend pas en saillie par rapport à la surface externe de la cartouche 40, en particulier lorsque ledit support 50 de données est une étiquette RFID.

La cavité 38 est délimitée radialement par une paroi interne qui comporte un renfoncement 54 destiné à permettre l'implantation d'une antenne 56 (non représentée sur la figure 1).

L'antenne 56 est destinée à permettre au moins la lecture par radiofréquence d'une ou des données du support 50.

Le pot 10 comporte dans sa partie inférieure un logement 58 dans lequel est agencé un dispositif 60 électronique de traitement de données. L'antenne 56 est reliée au dispositif 60 électronique de traitement de données.

L'antenne 56 ne constitue qu'un exemple non limitatif de moyens d'un dispositif 60 pour réaliser au moins un échange de données, notamment une lecture, par radiofréquence du support 50 de données.

En variante, non conforme à l'invention, le dispositif 60 électronique de traitement de données comporte des moyens du type lecteur optique ou encore émetteur/récepteur, notamment lorsque d'autres technologies d'échanges de données sans contact comme par exemple par vision optique ou par liaison infrarouge sont utilisées.

Grâce aux moyens 44, 46 d'indexation angulaire décrits précédemment, on assure un positionnement du support 50 de données porté par la cartouche 40, ici par rapport à l'antenne 56 du dispositif 60 électronique de traitement de données.

L'encoche 46 réalisée dans le col 30 et qui coopère avec les pions 44 pour former lesdits moyens d'indexation angulaire de la cartouche 40 est située verticalement au-dessus, à l'aplomb, du renfoncement 54 destiné à l'implantation de l'antenne 56.

Les moyens 44, 46 d'indexation permettent de positionner le support 50 de données en vis à vis de l'antenne 56, le support 50 et l'antenne 56 étant alors séparés l'un de l'autre par une très courte distance, de l'ordre du centimètre.

Avantageusement, le récipient 10 comporte des moyens 46 d'indexation angulaire destinés à coopérer avec les moyens 44 d'indexation angulaire complémentaires pour positionner le support 50 de données par rapport au dispositif 60 électronique de traitement de données, ici par rapport à l'antenne 56.

En l'absence d'antenne 56, les moyens 44, 46 d'indexation permettent de positionner le support 50 de données par rapport au dispositif 60 électronique de traitement de données, par exemple par rapport à des moyens de type lecteur optique ou encore émetteur/récepteur non conforme à l'invention.

Dans l'exemple de réalisation, le pot 10 comporte au moins une paroi 62 qui s'étend horizontalement formant une séparation entre la cavité 38 située au-dessus et le logement 58 du dispositif 60 électronique de traitement de données situé en dessous.

Le dispositif 60 électronique de traitement de données est principalement constitué d'une carte 65 du type à circuits imprimés pour en relier les différents composants électroniques.

De préférence, la carte 65 est montée solidaire du fond 14, par exemple immobilisée par l'intermédiaire de moyens de blocage.

Dans l'exemple de réalisation, les moyens de blocage de la carte 65 sont constitués par deux tétons 61 qui, formant l'extrémité libre d'une colonne solidaire du fond 14, sont chacun insérés dans un trou 63 complémentaire ménagé dans la carte 65.

Le pot 10 comporte avantageusement des moyens de fixation du fond 14 avec le corps 12.

Dans l'exemple de réalisation, le corps 12 comporte par exemple deux pattes 64 de fixation qui, visibles sur la coupe de la figure 4, s'étendent verticalement vers le bas dans le logement 58 et sont destinées à coopérer avec deux autres pattes 66 de fixation.

Les pattes 66 de fixation sont solidaires du fond 14 supportant le dispositif 60 électronique de traitement de données et s'étendent verticalement vers le haut à partir du fond.

L'extrémité libre 67 de chacune des pattes 64 de fixation et celle 69 de chacune des pattes 66 de fixation sont respectivement configurées pour s'engager mutuellement l'une avec l'autre afin d'assurer la retenue du fond 14.

Les extrémités libres 67 et 69 forment en effet des crochets qui s'engagent lorsque le fond 14 est emboîté verticalement du bas vers le haut à l'intérieur du corps 12.

De préférence, les deux pattes 64 de fixation sont réalisées venue de matière, en une seule pièce, avec la paroi 62 de séparation.

Comme illustré par la figure 4, la paroi 62 de séparation est alors ajourée à la base des pattes 64 de fixation de sorte que la cloison 62 ne sépare pas de manière étanche la cavité 38 recevant la cartouche 40 de produit cosmétique d'une part et le logement 58 dans lequel est agencé le dispositif 60 électronique de traitement de données d'autre part.

De préférence, une cloison 68 d'étanchéité est disposée au fond de la cavité 38 pour isoler de manière étanche le logement 58. On protège ainsi le dispositif 60 électronique de traitement de données, notamment de tout contact avec du produit cosmétique en cas d'écoulement depuis la cavité 38 recevant la cartouche 40.

La cloison 68 d'étanchéité complète avantageusement la protection du dispositif 60 électronique de traitement de données déjà obtenu avec la coopération entre la surface convexe de la jupe 15 du fond 14 et le corps 12 pour isoler le logement 58 par rapport à l'extérieur.

Le dispositif 60 électronique de traitement de données est apte à être alimenté en courant électrique par des moyens 70 d'alimentation.

Avantageusement, les moyens 70 d'alimentation du dispositif 60 électronique comportent au moins une batterie.

De préférence, ladite au moins une batterie formant les moyens 70 d'alimentation est intégrée dans le logement 58 avec le dispositif 60 électronique de traitement de données de manière à conserver au récipient, ici le pot 10, son caractère nomade.

Dans l'exemple de réalisation et tel qu'illustré sur la figure 3, les moyens 70 d'alimentation sont formés par au moins une pile. La pile 70 est préférentiellement une pile bouton qui, de forme plate, présente un faible encombrement.

De telles piles bouton (par exemple CR2450, etc.) sont couramment utilisées pour alimenter des dispositifs électroniques et présentent donc l'avantage d'être facilement disponibles dans le commerce et de surcroît peu coûteuses.

Le fond 14 comporte une trappe 72 pour permettre d'accéder directement à la pile 70 solidaire de la carte 65 du dispositif 60 située à l'intérieur du logement 58 du pot 10.

Avantageusement, la trappe 72 permet de pouvoir procéder au changement de la pile 70 lorsque cela devient nécessaire pour garantir l'alimentation du dispositif 60. Un tel changement est par exemple effectué une fois par an, préférentiellement tous les deux ans environ.

La trappe 72 d'accès comporte une ouverture apte à être fermée par un cache 74 escamotable, le cache 74 comportant avantageusement un joint d'étanchéité (non représenté).

De nombreuses variantes des moyens 70 d'alimentation sont possibles pour alimenter en courant électrique ledit dispositif 60 électronique de traitement de données.

Le choix des moyens 70 d'alimentation est notamment déterminé en fonction de paramètres de conception comme l'autonomie désirée, la consommation du dispositif 60 électronique de traitement de données, etc.

En variante, le dispositif 60 électronique de traitement de données est alimenté sans contact pour recharger une batterie interne par induction, par exemple grâce à la technologie Qi.

Par comparaison avec des moyens 70 d'alimentation constitués par une pile bouton, une telle batterie reste embarquée, intégrée à l'intérieur du pot 10 mais ne nécessite pas d'intervention en vue de son changement.

La trappe 72 ménagée dans le fond 14 selon l'exemple de réalisation décrit précédemment pourrait par exemple être supprimée.

En variante, les moyens 70 d'alimentation comportent une pile photovoltaïque alimentée grâce à l'énergie solaire pour alimenter le dispositif 60 et cela à titre de source principale ou secondaire d'alimentation.

Bien entendu, les moyens 70 d'alimentation du dispositif 60 peuvent également être réalisés de manière plus conventionnelle pour recharger une batterie, non pas sans contact, mais avec un raccordement filaire par exemple par l'intermédiaire d'un cordon électrique apte à être raccordé via un transformateur à une prise électrique.

Selon une autre variante, un câble avec une prise USB ou équivalente est utilisé pour assurer la recharge d'une batterie interne d'alimentation du dispositif 60 électronique.

Avantageusement, un tel câble USB peut permettre également de réaliser des échanges de données entre le dispositif 60 électronique de traitement de données et au moins un appareil, tel qu'un ordinateur, une tablette ou un téléphone.

Avantageusement, le dispositif 60 électronique selon l'exemple de réalisation est apte à occuper un état actif et un état passif afin de ne pas fonctionner en permanence, notamment pour réduire la consommation électrique et en augmenter l'autonomie.

Le dispositif 60 électronique est apte à occuper un état actif dans lequel le dispositif 60 va au moins lire des données du support 50 et un état passif dans lequel le dispositif 60 est arrêté ou en veille.

Le pot 10 comporte au moins un organe 76 de commande apte à commander au moins l'allumage du dispositif 60, c'est à dire un changement d'état de l'arrêt vers ledit état actif.

Tel qu'illustré sur la figure 2, le pot 10 comporte dans le fond 14 un perçage 78 pour permettre le montage traversant d'un tel organe 76 de commande.

L'organe 76 de commande est par exemple un interrupteur ou un bouton. L'organe 76 de commande comporte une extrémité reliée à la carte 65 du dispositif 60 électronique située à l'intérieur du logement 58 et une autre extrémité qui s'étend en saillie à l'extérieur de manière à pouvoir être actionnée manuellement.

De préférence, le dispositif 60 électronique de traitement de données est commandé sélectivement par l'intermédiaire d'une horloge interne entre lesdits états actif et passif dans lequel le dispositif 60 est mis en veille.

Le dispositif 60 électronique de traitement de données n'est donc pas arrêté après son allumage mais préférentiellement maintenu en veille.

Le dispositif 60 est par exemple commandé pour passer de l'état passif à l'état actif au moins une fois par jour, de manière à pouvoir détecter un nouveau support 50 de données avec une fréquence de recherche qui soit quotidienne.

En variante, l'organe 76 de commande est un interrupteur de type Marche/Arrêt pour commander sélectivement le dispositif 60 électronique entre lesdits états actif et passif.

Le dispositif 60 électronique de traitement de données est apte à lire une ou des données qui sont contenues dans le support 50 de données par l'intermédiaire de l'antenne 56.

Lesdites données contenues dans le support 50 sont notamment associées au produit cosmétique. De manière non limitative, les données sont par exemple des informations telles qu'une référence du produit permettant une identification, une date de fabrication, une durée correspondant à la période après ouverture (ou PAO), un numéro de série unique afin de permettre d'en vérifier le caractère authentique, etc.

Le dispositif 60 électronique de traitement de données est apte à enregistrer sélectivement au moins une première ouverture du produit de manière à pouvoir contrôler ultérieurement la période après ouverture (PAO) dudit produit.

Le dispositif 60 électronique enregistre par exemple la date du jour correspondant à la première ouverture du produit.

Le dispositif 60 électronique permet ensuite de réaliser automatiquement un calcul de la période après ouverture (PAO) afin de pouvoir la contrôler et de préférence alerter lorsque la période après ouverture (PAO) est expirée, expire ou va expirer.

Le support 50 de données est automatiquement lu par radiofréquence dès que ledit support 50 se trouve dans le champ de détection de l'antenne 56 du dispositif 60 électronique de traitement de données, sous réserve que celui-ci soit à l'état actif.

Selon l'exemple de réalisation décrit précédemment, une telle lecture du support 50 de données survient lors de l'introduction dans la cavité 38 du pot 10 d'une cartouche 40 comportant ledit support 50 de données.

Le dispositif 60 va lire les données contenues dans le support 50 de données et va ainsi identifier pour la première fois le support 50 porté par la cartouche 40, le dispositif 60 enregistre alors au moins la date correspondant à la première ouverture.

Toutefois et tel qu'indiqué précédemment, un pot 10 pouvant être rechargé en produit cosmétique au moyen de cartouches 40 ne constitue qu'un exemple non limitatif de réalisation.

En l'absence de cartouche 40, il est nécessaire d'avoir l'assurance que la détection d'un support 50 de données par le dispositif 60 à une date donnée correspond effectivement à la date de première ouverture et cela afin de pouvoir ensuite calculer de manière fiable la période après ouverture (PAO).

De préférence, des moyens 80 de protection amovibles sont interposés pour former un écran entre le support 50 de données et l'antenne 56 du dispositif 60 électronique de traitement de données.

Les moyens 80 de protection formant écran sont destinés à interdire la lecture du support 50 de données avant que lesdits moyens 80 de protection ne soient éliminés lors d'une première ouverture du produit.

Dans l'exemple de réalisation, la cartouche 40 comporte avantageusement un opercule 82 destiné à protéger le produit cosmétique, notamment de tout contact avec l'air.

L'opercule 82 est par exemple scellé thermiquement sur le rebord 42 de la cartouche 40 pour conserver le produit cosmétique contenu dans la cartouche 40 entre la fabrication et la première ouverture en vue d'une utilisation.

De préférence, l'opercule 82 est réalisé dans un matériau métallique, par exemple en aluminium.

Avantageusement, les moyens 80 de protection sont conçus pour garantir que leur élimination est obtenue simultanément avec la première ouverture du produit, c'est à dire soit concomitante à celle-ci.

En effet et selon l'exemple de réalisation, l'introduction d'une cartouche 40 dans le pot 10 ne s'accompagne pas nécessairement d'une première ouverture du produit, l'opercule 82 pouvant certes être retiré immédiatement mais également l'être ultérieurement.

La date enregistrée par le dispositif 60 pourrait alors être inexacte et par conséquent le calcul de la période après ouverture (PAO) faussé, erroné.

Il est à noter qu'un problème similaire est susceptible de se produire dans une réalisation sans cartouche 40, lorsque le produit cosmétique est conditionné directement dans le pot 10.

Pour remédier au problème de décalage entre la date enregistrée par le dispositif 60 et la date effective de première ouverture du produit, il est en outre possible d'utiliser l'organe 76 de commande pour activer sélectivement le dispositif 60, en le faisant notamment passer de l'arrêt à l'état actif ou encore en commandant ainsi une réinitialisation du dispositif 60.

Toutefois, il existe alors toujours un risque de décalage par exemple si l'on oublie d'activer le dispositif 60 lors de la première ouverture du produit ou encore si l'organe 76 de commande est actionné involontairement avant la première ouverture du produit.

Selon une caractéristique particulièrement avantageuse, les moyens 80 de protection formant écran sont constitués par une partie de l'opercule 82.

Avantageusement, l'opercule 82 est réalisé dans un matériau métallique, comme l'aluminium, ce qui convient pour obtenir un écran qui soit apte à bloquer la lecture du support 50 de données par l'antenne 56 du dispositif 60.

Ladite partie de l'opercule 82 formant les moyens 80 de protection est par exemple constituée par une bande 84 qui, d'une largeur déterminée, s'étend à partir de l'opercule 82 pour venir recouvrir totalement le support 50 de données et former ledit écran.

De préférence, la bande 84 se prolonge sur une longueur suffisante pour permettre d'en fixer l'extrémité libre au-delà du support 50 de données, sur la cartouche 40, par exemple sous le fond de la cartouche 40.

L'extrémité libre de la bande 84 est avantageusement fixée à la cartouche 40, par exemple par collage, afin d'immobiliser les moyens 80 de protection de manière à pouvoir en garantir le rôle d'écran devant le support 50 de données.

Avantageusement, la fixation de la bande 84 est réalisée de manière à l'immobiliser tout en cédant toutefois facilement lorsqu'un effort de traction est appliqué sur la bande 84.

De tels moyens 80 de protection vont être éliminés simultanément avec l'opercule 82 lors de la première ouverture du produit, plus précisément ici l'ouverture de la cartouche 40.

Avantageusement, l'opercule 82 comporte des moyens de préhension (non représentés), tels qu'une languette ou une oreille, destinés à faciliter leur élimination lors de la première ouverture du produit.

Dans l'exemple de réalisation, les moyens 80 de protection sont susceptibles d'être éliminés même lorsque la cartouche 40 se trouve à l'intérieur de la cavité 38 du pot 10, en position d'utilisation.

L'utilisatrice désireuse de procéder à une première ouverture du produit va ôter l'opercule 82 de la cartouche 40, le cas échéant avec l'aide des moyens de préhension lui offrant une partie libre non scellée aisément saisissable.

Lorsque l'utilisatrice a fini d'ôter l'opercule 82, l'ayant totalement séparé du rebord 42 de la cartouche 40, la poursuite de l'effort de traction lui permet alors d'éliminer simultanément les moyens 80 de protection.

En effet, la bande 84 formant les moyens 80 de protection est avantageusement libre d'être extraite simultanément avec l'opercule 82 grâce à la fente 48 de passage ménagée entre le rebord 42 de la cartouche 40 et le bord 32 du col 30.

Par conséquent, la réalisation de moyens 80 de protection en une seule pièce avec l'opercule 82 offre la garantie que la date enregistrée par le dispositif 60, désormais libre de lire le support 50 de données, correspond bien à la date de première ouverture du produit.

En l'absence de moyens 80 de protection, le dispositif 60 électronique effectue via l'antenne 56 une lecture du support 50 de données lequel support 50 lui délivre alors notamment des informations permettant d'identifier le produit cosmétique.

De préférence, les informations lues par le dispositif 60 comportent la durée de la période après ouverture (PAO) du produit, par exemple 6 ou 12 mois.

Grâce à l'élimination des moyens 80 de protection, le dispositif 60 peut enregistrer la date de la première ouverture du produit correspondant dans l'exemple au jour de l'enlèvement de l'opercule 82 recouvrant la cartouche 40.

Le dispositif 60 dispose alors des données nécessaires susceptibles d'être transmises et/ou utilisées directement pour calculer une durée écoulée depuis ladite date de première ouverture afin de déterminer si ladite période après ouverture (PAO) du produit est ou non expirée.

Pour ce faire, le dispositif 60 procède par exemple à une comparaison entre ladite durée écoulée depuis la date de première ouverture et la durée de la période après ouverture (PAO) du produit.

Avantageusement, une alerte est notamment donnée lorsque la durée écoulée étant supérieure à la durée de la période après ouverture (PAO), ladite période après ouverture (PAO) du produit est expirée, dépassée.

En variante, les moyens 80 de protection sont également susceptibles d'être éliminés avant d'introduire une cartouche 40 dans le pot 10, notamment mais non exclusivement lorsque les moyens 80 de protection formant écran sont indépendants de l'opercule 82.

Les moyens 80 de protection sont alors avantageusement pourvus de moyens de préhension pour faciliter leur élimination, par exemple par traction comme pour l'opercule 82.

Les moyens 80 de protection comme le support 50 de données ne sont pas nécessairement solidaires de la cartouche 40 de produit cosmétique.

En variante, lesdits moyens 80 de protection sont intégrés directement à la structure du pot 10 et cela indépendamment du caractère rechargeable ou non du pot 10 au moyen d'une cartouche 40.

En variante, les moyens 80 de protection sont aptes à être éliminés simultanément lors de la première ouverture du récipient, les moyens 80 de protection étant par exemple reliés au couvercle 16 de manière à être arrachés automatiquement lors de la première ouverture du pot 10.

De préférence, les moyens 80 de protection ne sont alors pas solidaires du support 50 de données, que celui-ci soit logé dans le pot 10 ou solidaire comme précédemment d'une recharge 40.

Si les matériaux métalliques utilisés pour l'opercule 82 sont appropriés pour obtenir un écran, les moyens 80 de protection sont également susceptibles d'être obtenus avec d'autres matériaux, par exemple un film plastique comportant au moins une couche conductrice pour former ledit écran.

En variante, les moyens 80 de protection sont solidaires du support 50 de données et le recouvrent pour former un écran aux échanges, lecture et/ou écriture, par radiofréquence avec le dispositif 60 électronique du pot 10.

Avantageusement, le dispositif 60 électronique de traitement de données est apte à échanger des données avec au moins un appareil électronique (non représenté).

De préférence, ledit au moins un appareil électronique est notamment un téléphone portable, une tablette, un ordinateur ou tout autre appareil analogue comportant notamment au moins un écran d'affichage.

De préférence, le dispositif 60 communique avec l'appareil en utilisant une technologie du type « BLE » acronyme en anglais pour « Bluetooth Low Energy ».

En variante, l'échange de données entre le dispositif 60 et l'appareil est réalisé en utilisant toute autre technologie équivalente d'échanges de données, préférentiellement « sans contact ».

L'appareil électronique comporte avantageusement une application logicielle qui est destinée à délivrer des informations en relation avec le produit cosmétique et tout particulièrement la période après ouverture (PAO).

De préférence, le dispositif 60 électronique communique à l'appareil les données qui, associées au produit, sont lues dans le support 50 de données ainsi que la date de première ouverture et/ou la durée restante avant l'expiration de la période après ouverture (PAO).

Avantageusement, le dispositif 60 communique également le niveau de charge de la batterie formant les moyens 70 d'alimentation du dispositif.

L'application installée dans l'appareil veille à ce que le niveau de la batterie soit toujours suffisant pour garantir un bon fonctionnement du dispositif électronique et est apte à générer une alerte lorsqu'un changement de la batterie doit être effectué.

L'application installée dans l'appareil permet d'apporter à l'utilisatrice non seulement de l'information sur le produit cosmétique du récipient connecté, en particulier sur ladite période après ouverture (PAO), mais encore d'autres informations comme une authentification du produit, des conseils ciblés, des offres commerciales, etc.

L'application comporte par exemple une fonction de calendrier ou communique avec le calendrier d'une autre application installée sur l'appareil.

En variante non représentée, le récipient 10 comporte des moyens indicateurs (non représentés) pour permettre de contrôler la période après ouverture (PAO) du produit, lesdits moyens indicateurs étant par exemple des moyens d'affichage lumineux et/ou des moyens d'avertissement sonore.

Les moyens d'affichage lumineux sont par exemple constitués par un écran digital notamment apte à afficher la date d'expiration de la période après ouverture (PAO), en variante par au moins une lampe, en particulier de type LED émettant par exemple sélectivement une lumière rouge lorsque la période après ouverture (PAO) est expirée. Bien entendu, l'invention n'est nullement limitée à un récipient formé par un pot selon l'exemple de réalisation et pourrait être appliquée à d'autres exemples de récipients tels qu'un tube, un flacon, etc. qui peuvent également être à usage unique ou rechargeable au moyen de cartouches de produit.

En variante, le dispositif électronique de traitement de données peut être intégré à n'importe quelle partie du récipient, ledit dispositif est par exemple solidaire d'un bouchon destiné à assurer la fermeture d'un tube, le tube constituant alors une cartouche de produit de manière à permettre une réutilisation du bouchon.

## Revendications

1. Récipient (10) pour conditionner un produit cosmétique présentant une période après ouverture (PAO) donnée, ledit récipient (10) comportant au moins un dispositif (60) électronique de traitement de données apte à lire une ou des données qui, associées au produit, sont contenues dans un support (50) de données pour enregistrer sélectivement au moins une première ouverture du produit de manière à pouvoir calculer la période après ouverture (PAO) dudit produit, ledit récipient comportant le support (50) de données, **caractérisé en ce que** le support (50) de données est une étiquette RFID apte à être lue par radiofréquence par ledit dispositif (60) électronique.

2. Récipient selon la revendication 1, **caractérisé en ce que** des moyens (80) de protection amovibles sont agencés pour former un écran interdisant une lecture du support (50) de données par une antenne (56) du dispositif (60) électronique jusqu'à ce que lesdits moyens (80) de protection soient éliminés lors d'une première ouverture du produit.

3. Récipient selon la revendication 2, **caractérisé en ce que** les moyens (80) de protection sont constitués par une partie (84) d'un opercule (82) qui est scellé pour recouvrir le produit contenu dans le récipient (10).

4. Récipient selon l'une quelconque des revendications précédentes, **caractérisé en ce que** le récipient (10) comporte une cavité (38) dans laquelle est montée une cartouche (40) de produit cosmétique pour recharger le récipient (10) en produit.

5. Récipient selon la revendication 4, **caractérisé en ce que** le support (50) de données est solidaire de la cartouche (40) de produit cosmétique.

6. Récipient selon les revendications 3 et 5, **caractérisé en ce que** le récipient (10) et la cartouche (40) comportent des moyens (44, 46) d'indexation angulaire pour positionner le support (50) de données par rapport à l'antenne (56) du dispositif (60) électronique de traitement de données.

7. Récipient selon l'une quelconque des revendications précédentes, **caractérisé en ce que** le dispositif (60) électronique de traitement de données est apte à être alimenté en courant électrique par des moyens (70) d'alimentation formés par au moins une batterie, telle qu'une pile bouton.

8. Récipient selon l'une quelconque des revendications précédentes, **caractérisé en ce que** le dispositif (60) électronique de traitement de données est apte à occuper un état actif et un état passif dans lequel ledit dispositif (60) est arrêté ou en veille, notamment pour en réduire la consommation d'électricité.

9. Récipient selon l'une quelconque des revendications précédentes, **caractérisé en ce que** le dispositif (60) électronique de traitement de données est apte à échanger des données avec au moins un appareil électronique, ledit appareil comportant une application logicielle destinée à délivrer des informations par l'intermédiaire d'au moins un écran d'affichage dont au moins une en relation avec la période après ouverture (PAO).

10. Cartouche (40) de produit cosmétique présentant une période après ouverture (PAO) donnée pour recharger un récipient (10) selon l'une quelconque des revendications précédentes, ledit récipient (10) comportant au moins un dispositif (60) électronique de traitement de données apte à lire une ou des données qui, associées audit produit cosmétique, sont contenues dans un support (50) de données pour enregistrer sélectivement au moins une première ouverture du produit de manière à pouvoir calculer la période après ouverture (PAO) dudit produit, la cartouche (40) comportant ledit support (50) de données et le support (50) de données solidaire de la cartouche (40) étant une étiquette RFID.

11. Cartouche (40) selon la revendication 10, **caractérisée en ce que** la cartouche (40) comporte des moyens (80) de protection amovibles sont agencés pour former un écran interdisant une lecture du support (50) de données jusqu'à ce que lesdits moyens (80) de protection soient éliminés lors d'une première ouverture du produit.

12. Cartouche (40) selon la revendication 11, **caractérisée en ce que** les moyens (80) de protection sont constitués par une partie (84) d'un opercule (82) qui est scellé pour recouvrir le produit contenu dans la cartouche (40).

13. Cartouche (40) selon l'une des revendications 10 à 12, **caractérisée en ce que** la cartouche (40) comporte des moyens (44) d'indexation angulaire destinés à coopérer avec des moyens (46) complémentaires du récipient (10) pour positionner ledit support (50) de données par rapport à une antenne (56) dudit dispositif (60) électronique de traitement de données.

## Patentansprüche

1. Behälter (10) zum Verpacken eines Kosmetikprodukts, das einen gegebenen Verwendungszeitraum nach Öffnung (PAO) aufweist, wobei der Behälter (10) mindestens eine elektronische Datenverarbeitungsvorrichtung (60) umfasst, die dazu geeignet ist, ein Datum oder Daten zu lesen, die mit dem Produkt verbunden sind, die in einem Datenträger (50) enthalten sind, um selektiv mindestens ein erstes Öffnen des Produkts derart aufzuzeichnen, dass der Verwendungszeitraum nach Öffnung (PAO) des Produkts berechnet werden kann, wobei der Behälter den Datenträger (50) umfasst, **dadurch gekennzeichnet, dass** der Datenträger (50) ein RFID-Etikett ist, das dazu geeignet ist, per Funkfrequenz von der elektronischen Vorrichtung (60) gelesen zu werden.

2. Behälter nach Anspruch 1, **dadurch gekennzeichnet, dass** abnehmbare Schutzmittel (80) eingerichtet sind, um eine Abschirmung zu bilden, die ein Lesen des Datenträgers (50) durch eine Antenne (56) der elektronischen Vorrichtung (60) untersagt, bis die Schutzmittel (80) bei einem ersten Öffnen des Produkts beseitigt werden.

3. Behälter nach Anspruch 2, **dadurch gekennzeichnet, dass** die Schutzmittel (80) aus einem Teil (84) eines Verschlusselements (82), das versiegelt ist, um das Produkt, das in dem Behälter (10) enthalten ist, abzudecken, bestehen.

4. Behälter nach einem der vorstehenden Ansprüche, **dadurch gekennzeichnet, dass** der Behälter (10) einen Hohlraum (38) umfasst, in dem ein Kosmetikprodukteinsatz (40) montiert ist, um den Behälter (10) mit Produkt nachzufüllen.

5. Behälter nach Anspruch 4, **dadurch gekennzeichnet, dass** der Datenträger (50) fest mit dem Kosmetikprodukteinsatz (40) verbunden ist.

6. Behälter nach den Ansprüchen 3 und 5, **dadurch gekennzeichnet, dass** der Behälter (10) und der Einsatz (40) Mittel (44, 46) zur Winkelpositionierung umfassen, um den Datenträger (50) in Bezug auf die Antenne (56) der elektronischen Datenverarbeitungsvorrichtung (60) zu positionieren.

7. Behälter nach einem der vorstehenden Ansprüche, **dadurch gekennzeichnet, dass** die elektronische Datenverarbeitungsvorrichtung (60) dazu geeignet ist, mit Strom durch Versorgungsmittel (70), die aus mindestens einer Batterie, wie einer Knopfbatterie, bestehen, versorgt zu werden.

8. Behälter nach einem der vorstehenden Ansprüche, **dadurch gekennzeichnet, dass** die elektronische Datenverarbeitungsvorrichtung (60) dazu geeignet ist, einen aktiven Zustand und einen passiven Zustand einzunehmen, in dem die Vorrichtung (60) ausgeschaltet oder in Standby ist, insbesondere, um ihren Stromverbrauch zu verringern.

9. Behälter nach einem der vorstehenden Ansprüche, **dadurch gekennzeichnet, dass** die elektronische Datenverarbeitungsvorrichtung (60) dazu geeignet ist, Daten mit mindestens einem elektronischen Gerät auszutauschen, wobei das Gerät eine Softwareanwendung umfasst, die dazu bestimmt ist, Informationen über mindestens einen Anzeigebildschirm zu liefern, darunter mindestens eine Beziehung mit dem Verwendungszeitraum nach Öffnung (PAO).

10. Kosmetikprodukteinsatz (40), der einen gegebenen Verwendungszeitraum nach Öffnung (PAO) zum Nachfüllen eines Behälters (10) nach einem der vorstehenden Ansprüche aufweist, wobei der Behälter (10) mindestens eine elektronische Datenverarbeitungsvorrichtung (60) umfasst, die dazu geeignet ist, ein Datum oder Daten zu lesen, die mit dem kosmetischen Produkt verbunden sind, die in einem Datenträger (50) enthalten sind, um selektiv mindestens ein erstes Öffnen des Produkts derart aufzuzeichnen, dass der Verwendungszeitraum nach Öffnung (PAO) des Produkts berechnet werden kann, wobei der Einsatz (40) den Datenträger (50) umfasst, und der Datenträger (50), der fest mit dem Einsatz (40) verbunden ist, ein RFID-Etikett ist.

11. Einsatz (40) nach Anspruch 10, **dadurch gekennzeichnet, dass** der Einsatz (40) abnehmbare Schutzmittel (80) umfasst, die eingerichtet sind, um eine Abschirmung zu bilden, die ein Lesen des Datenträgers (50) untersagt, bis die Schutzmittel (80) bei einem ersten Öffnen des Produkts beseitigt werden.

12. Einsatz (40) nach Anspruch 11, **dadurch gekennzeichnet, dass** die Schutzmittel (80) aus einem Teil (84) eines Verschlusselements (82) bestehen, das versiegelt ist, um den Inhalt in dem Einsatz (40) abzudecken.

13. Einsatz (40) nach einem der Ansprüche 10 bis 12, **dadurch gekennzeichnet, dass** der Einsatz (40) Mittel (44) zur Winkelpositionierung umfasst, die dazu bestimmt sind, mit komplementären Mitteln (46) des Behälters (10) zusammenzuwirken, um den Datenträger (50) in Bezug auf eine Antenne (56) der elektronischen Datenverarbeitungsvorrichtung (60) zu positionieren.

## Claims

1. Container (10) for packaging a cosmetic product having a given period after opening (PAO), said container (10) comprising at least one electronic device (60) for processing data capable of reading one or more data which, associated with the product, are contained in a data support (50) to selectively record at least one first opening of the product so as to be able to calculate the period after opening (PAO) of said product, said container comprising the data support (50), **characterised in that** the data support (50) is an RFID label capable of being read by radiofrequency by said electronic device (60).

2. Container according to claim 1, **characterised in that** removable protective means (80) are arranged to form a screen forbidding a reading of the data support (50) by an antenna (56) of the electronic device (60) until said protective means (80) are removed during a first opening of the product.

3. Container according to claim 2, **characterised in that** the protective means (80) are formed by a portion (84) of a lid (82) which is sealed to cover the product contained in the container (10).

4. Container according to any one of the preceding claims, **characterised in that** the container (10) comprises a cavity (38) wherein is mounted a cosmetic product cartridge (40) to refill the container (10) with product.

5. Container according to claim 4, **characterised in that** the data support (50) is integral with the cosmetic product cartridge (40).

6. Container according to claims 3 and 5, **characterised in that** the container (10) and the cartridge (40) comprise angular indexing means (44, 46) for positioning the data support (50) with respect to the antenna (56) of the electronic device (60) for processing data.

7. Container according to any one of the preceding claims, **characterised in that** the electronic device (60) for processing data is capable of being supplied with electric current by supply means (70) formed by at least one battery, such as a button cell.

8. Container according to any one of the preceding claims, **characterised in that** the electronic device (60) for processing data is capable of occupying an active state and a passive state wherein said device (60) is stopped or on standby, in particular to reduce the electricity consumption of it.

9. Container according to any one of the preceding claims, **characterised in that** the electronic device (60) for processing data is capable of exchanging data with at least one electronic device, said device comprising a software application intended to deliver information by way of at least one display screen of which at least one with respect to the period after opening (PAO).

10. Cosmetic product cartridge (40) having a given period after opening (PAO) to refill a container (10) according to any one of the preceding claims, said container (10) comprising at least one electronic device (60) for processing data capable of reading one or more data which, associated with said cosmetic product, are contained in a data support (50) to selectively record at least one first opening of the product so as to be able to calculate the period after opening (PAO) of said product, the cartridge (40) comprising said data support (50) and the data support (50) integral with the cartridge (40) being an RFID label.

11. Cartridge (40) according to claim 10, **characterised in that** the cartridge (40) comprises removable protective means (80) are arranged to form a screen forbidding a reading of the data support (50) until said protective means (80) are removed during a first opening of the product.

12. Cartridge (40) according to claim 11, **characterised in that** the protective means (80) are formed by a portion (84) of a lid (82) which is sealed to cover the product contained in the cartridge (40).

13. Cartridge (40) according to one of claims 10 to 12, **characterised in that** the cartridge (40) comprises angular indexing means (44) intended to engage with complementary means (46) of the container (10) for positioning said data support (50) with respect to an antenna (56) of said electronic device (60) for processing data.
